(19) Europäisches Patentamt
European Patent Office
Office européen des brevets

(11) **EP 4 550 101 A1**

(12) **EUROPEAN PATENT APPLICATION**
published in accordance with Art. 153(4) EPC

(43) Date of publication:
07.05.2025 Bulletin 2025/19

(21) Application number: 23830898.5

(22) Date of filing: 23.05.2023

(51) International Patent Classification (IPC):
*G06F 3/043* (2006.01) *H04R 1/00* (2006.01)
*H04R 3/00* (2006.01)

(52) Cooperative Patent Classification (CPC):
G06F 3/043; H04R 1/00; H04R 3/00

(86) International application number:
PCT/JP2023/019163

(87) International publication number:
WO 2024/004446 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.06.2022 JP 2022105434

(71) Applicant: Panasonic Intellectual Property
Management Co., Ltd.
Kadoma-shi, Osaka 571-0057 (JP)

(72) Inventors:
• TOMODA, Masaaki
  Kadoma-shi, Osaka 571-0057 (JP)
• HIRAMATSU, Kodai
  Kadoma-shi, Osaka 571-0057 (JP)
• KITAGAWA, Hiroki
  Kadoma-shi, Osaka 571-0057 (JP)

(74) Representative: Novagraaf International SA
Chemin de l'Echo 3
1213 Onex, Geneva (CH)

(54) **SOUND SIGNAL REPRODUCTION DEVICE, METHOD FOR CONTROLLING SOUND SIGNAL REPRODUCTION DEVICE, AND PROGRAM FOR CONTROLLING SOUND SIGNAL REPRODUCTION DEVICE**

(57) A sound signal reproduction device (100) includes: a first vibration generator (111) and a second vibration generator (112) that are attached to a first attaching member (211) and a second attaching member (212), respectively; a first vibration sensor (121) and a second vibration sensor (122) that are attached to a third attaching member (213); a drive device (130) that drives the vibration generators; a processor (150); and a storage device (160) that stores a program, wherein position information, which indicates a position of a vibration generated by a user on the third attaching member (213) to which the vibration sensors are attached based on signals obtained from the vibration sensors, is generated, and control information is transmitted based on the position information.

EP 4 550 101 A1

# FIG. 1

## Description

[Technical Field]

The present disclosure relates to a sound signal reproduction device, a method for controlling a sound signal reproduction device, and a program for controlling a sound signal reproduction device.

[Background Art]

Patent Literature (PTL) 1 describes a technology in which a speaker unit, which forcibly vibrates a mirror and generates sound from the mirror, is attached to a bathroom mirror. In addition, PTL 1 also describes a technology in which a touch sensor is provided on the surface of the mirror to control the speaker unit.

[Citation List]

[Patent Literature]

[PTL 1] Japanese Unexamined Patent Application Publication No. 2004-222205

[Summary of Invention]

[Technical Problem]

The present disclosure provides a sound signal reproduction device, a method for controlling a sound signal reproduction device, and a program for controlling a sound signal reproduction device, which can perform control over sound reproduction and the like.

[Solution to Problem]

The sound signal reproduction device in the present disclosure includes: a vibration generator that is attached to one or more attaching members; a vibration sensor that is attached to an attaching member, the attaching member being the one or more attaching members to which the vibration generator is attached or a separate attaching member separate from the one or more attaching members; a drive device that drives the vibration generator based on a sound signal to generate sound through the one or more attaching members; a processor that executes a program; and a storage device that stores the program executed by the processor, wherein causing the processor to execute the program performs: generating position information indicating a position of a vibration generated by a user on the attaching member to which the vibration sensor is attached, based on a signal obtained from the vibration sensor; and transmitting control information based on the position information.

[Advantageous Effects of Invention]

According to the present disclosure, control over audio reproduction and the like can be performed depending on the position at which the user generates vibrations on the attaching member to which the vibration sensor is attached.

[Brief Description of Drawings]

[FIG. 1]

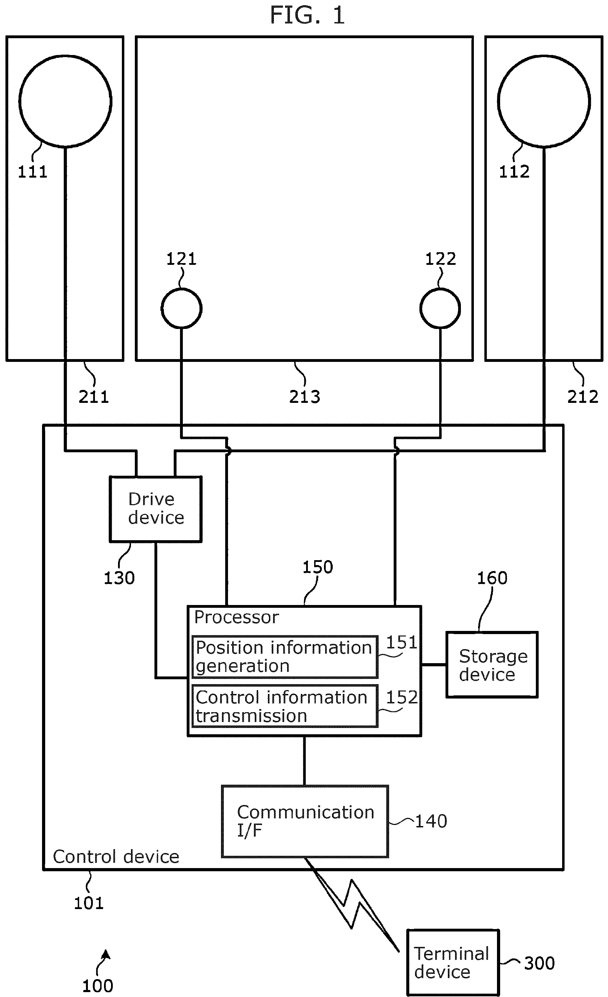

FIG. 1 is a diagram illustrating the device configuration and functional configuration of a sound signal reproduction device according to Embodiment 1.
[FIG. 2]

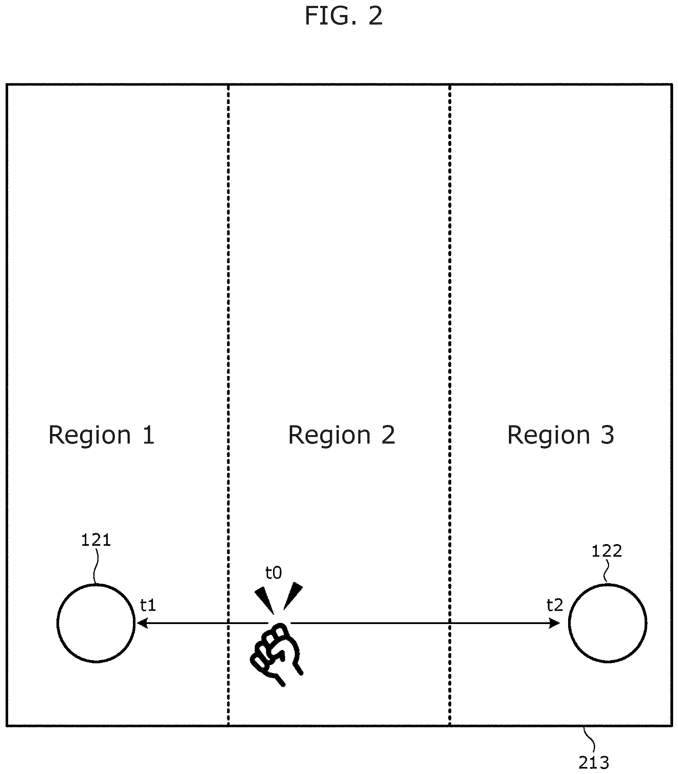

FIG. 2 is a diagram illustrating Example 1 of a user's operation on a third attaching member in Embodiment 1.
[FIG. 3]

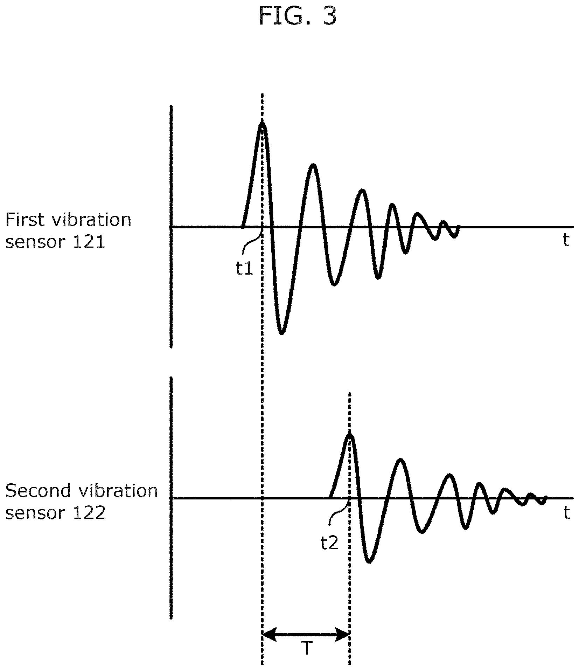

FIG. 3 is a diagram illustrating the detection results of vibrations generated by the user's operation in Embodiment 1.
[FIG. 4]

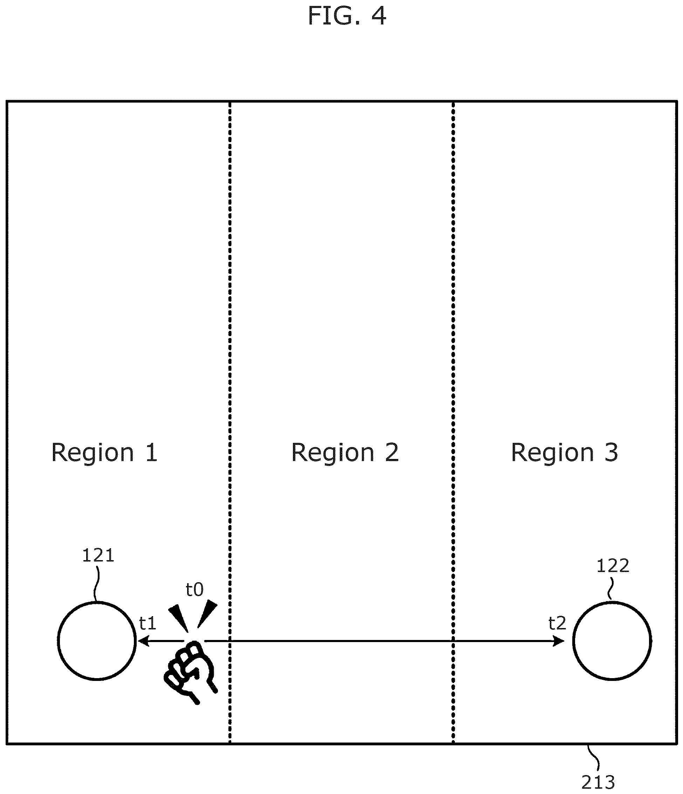

FIG. 4 is a diagram illustrating Example 2 of a user's operation on a third attaching member in Embodiment 1.
[FIG. 5]

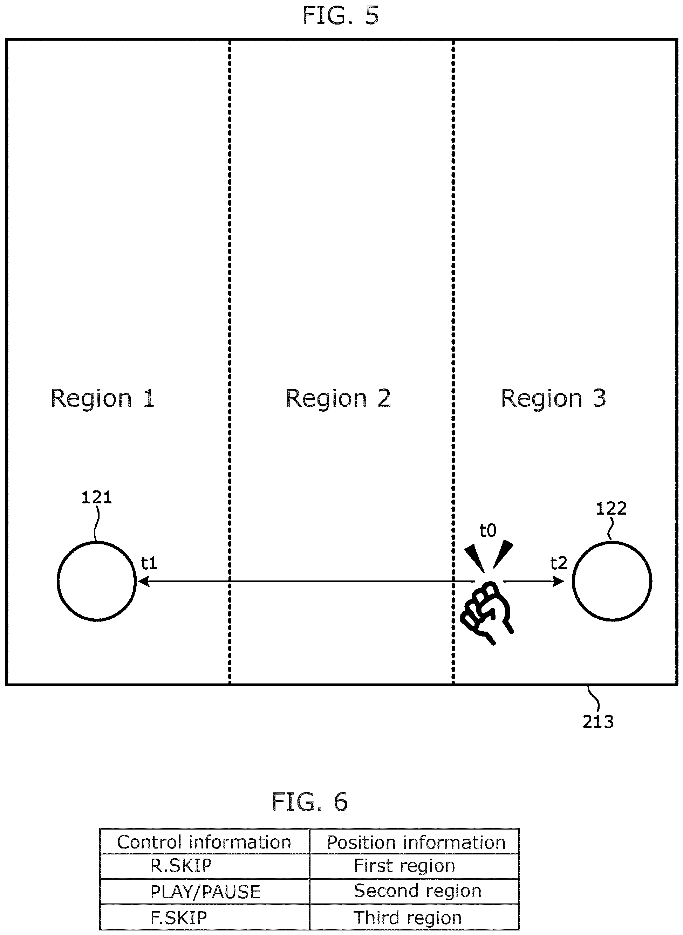

FIG. 5 is a diagram illustrating Example 3 of a user's operation on the third attaching member in Embodiment 1.
[FIG. 6]
FIG. 6 is a diagram illustrating Example 1 of relationship information in Embodiment 1.
[FIG. 7]

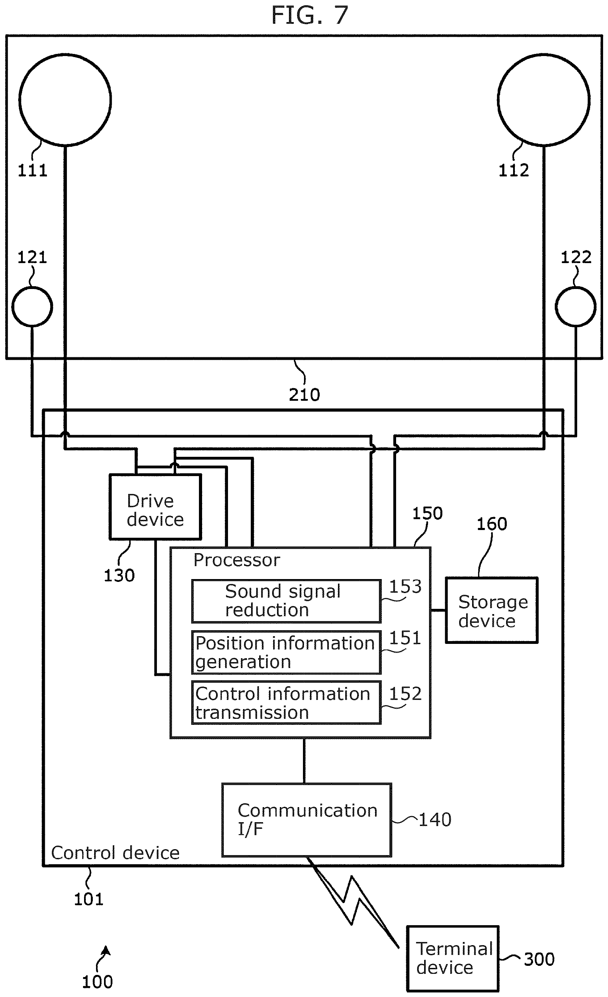

FIG. 7 is a diagram illustrating the device configuration and functional configuration of a sound signal reproduction device according to Embodiment 2.
[FIG. 8]

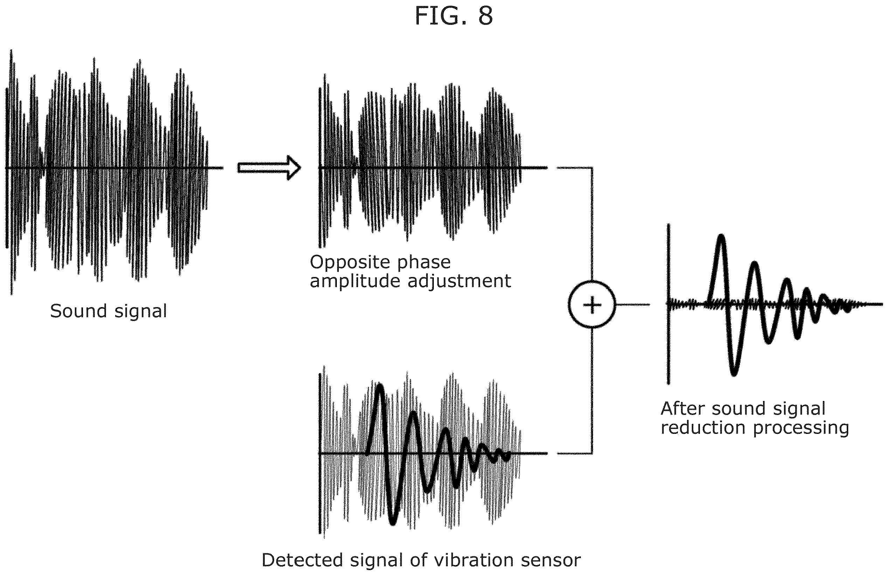

FIG. 8 is a diagram illustrating the flow of the process of reducing the sound signal in Embodiment 2.
[FIG. 9]

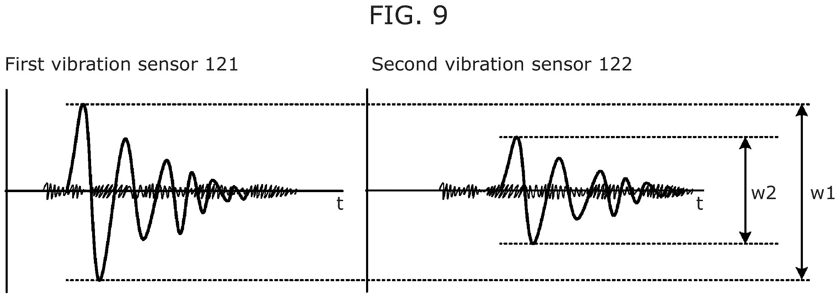

FIG. 9 is a diagram illustrating the detection results of vibrations generated by the user's operation in Embodiment 2.
[FIG. 10]

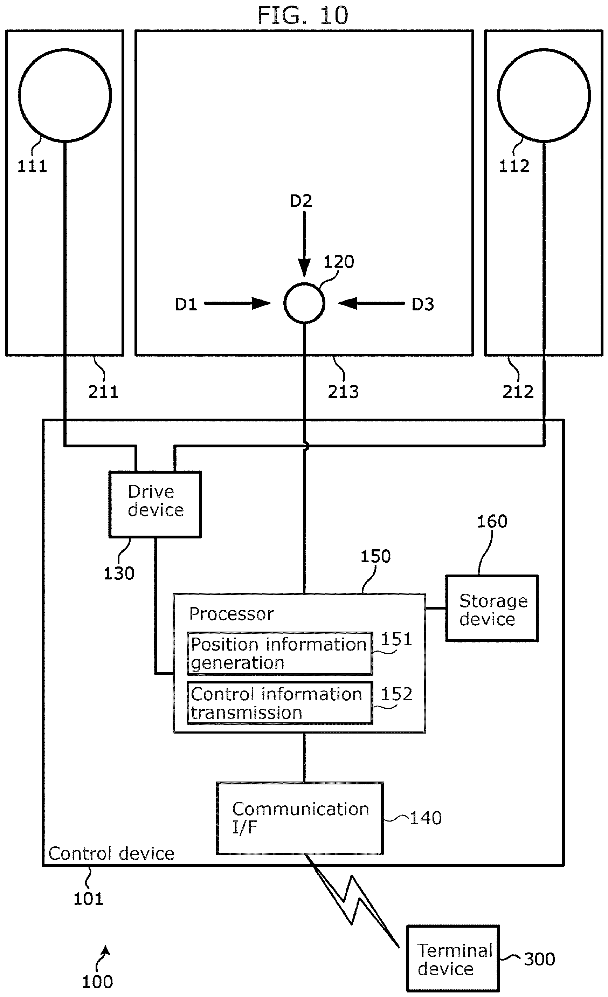

FIG. 10 is a diagram illustrating the device configuration and functional configuration of a sound signal reproduction device according to Embodiment 3.
[FIG. 11]

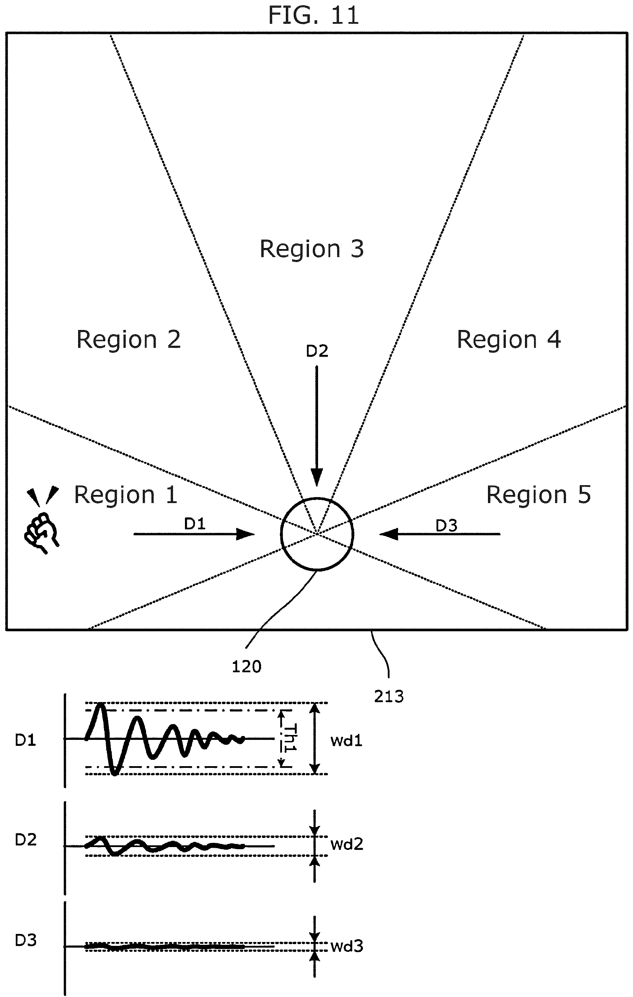

FIG. 11 is a diagram illustrating Example 4 of a user's operation on the third attaching member in Embodiment 3.
[FIG. 12]

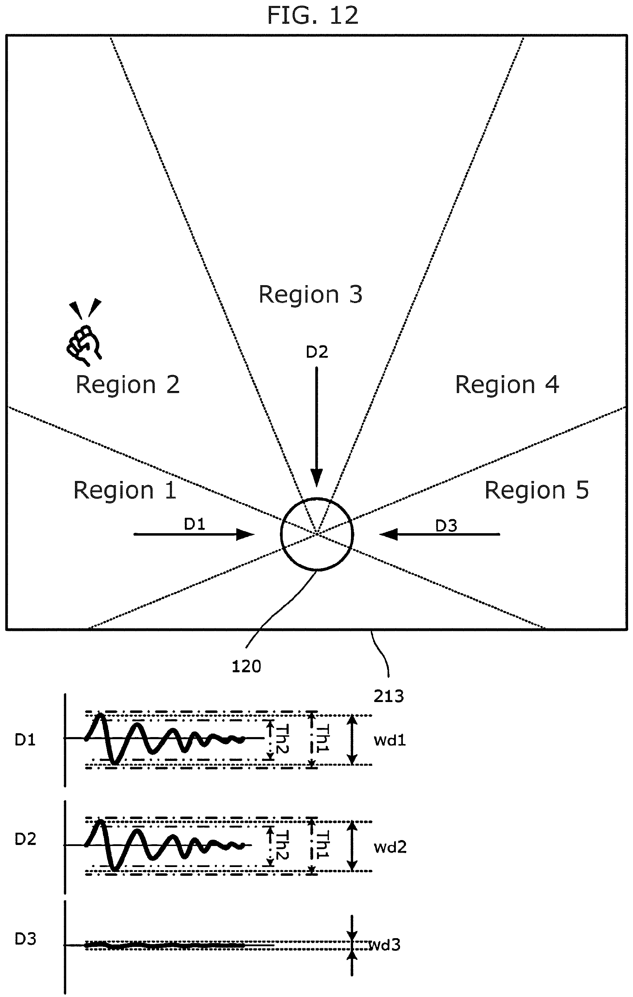

FIG. 12 is a diagram illustrating Example 5 of a user's operation on the third attaching member in Embodiment 3.
[FIG. 13]

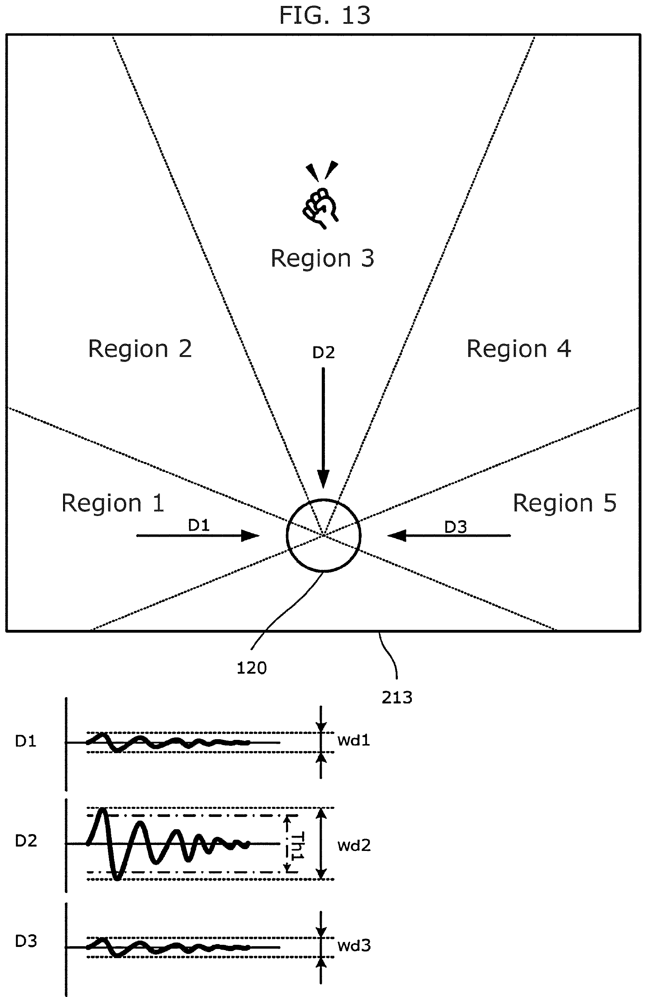

FIG. 13 is a diagram illustrating Example 6 of a user's operation on the third attaching member in Embodiment 3.
[FIG. 14]

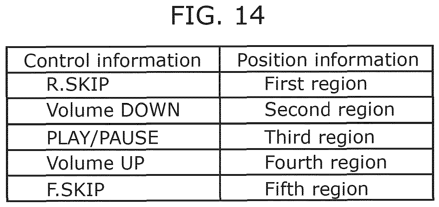

FIG. 14 is a diagram illustrating Example 2 of relationship information in Embodiment 3.
[FIG. 15]

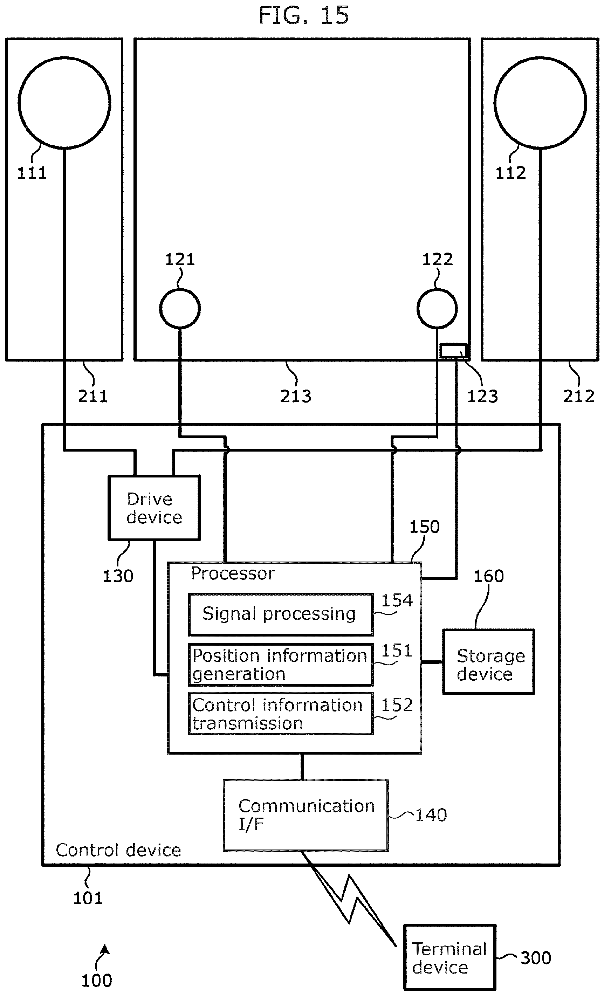

FIG. 15 is a diagram illustrating the device configuration and functional configuration of a sound signal reproduction device according to Embodiment 4.
[FIG. 16]

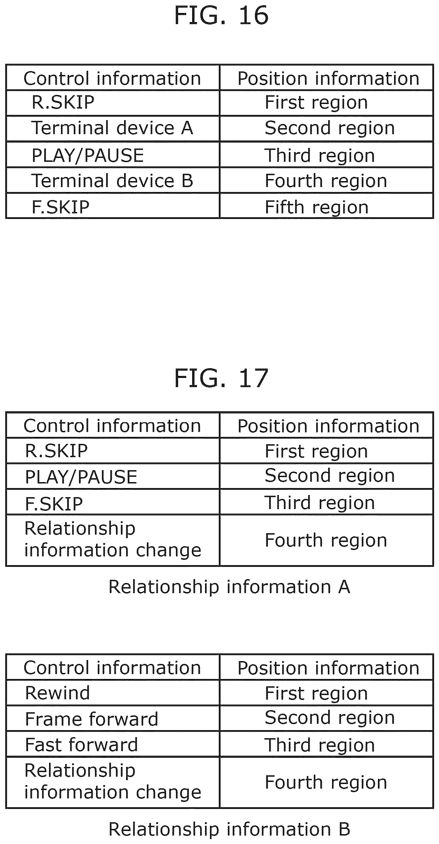

FIG. 16 is a diagram illustrating Example 3 of relationship information.
[FIG. 17]
FIG. 17 is a diagram illustrating Example 4 of relationship information.
[FIG. 18]

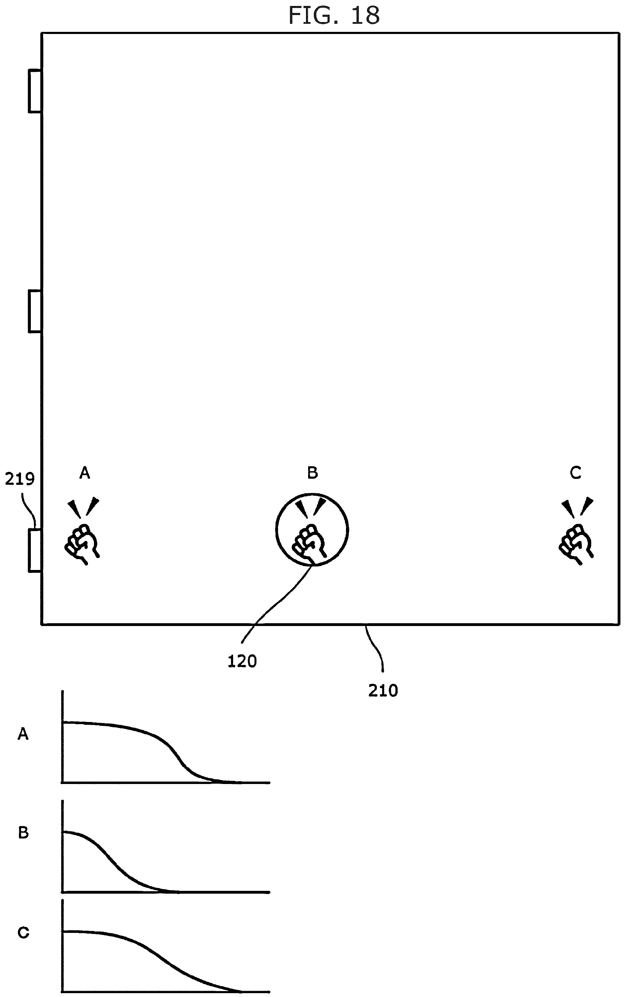

FIG. 18 is a diagram illustrating Example 7 of a user's operation on the attaching member.

[Description of Embodiments]

Hereinafter, embodiments of a sound signal reproduction device, a method for controlling a sound signal reproduction device, and a program for controlling a sound signal reproduction device according to the present disclosure will be described with reference to the drawings. It should be noted that the following embodiments are presented as examples to explain the present disclosure, and are not intended to limit the present disclosure. For example, the shapes, structures, materials, components, relative positional relationships, connection states, numerical values, mathematical expressions, the contents of each step in the method, the order of each step, and the like that are shown in the following embodiments are merely examples, and may include contents that are not described below. In addition, while geometric expressions such as parallel and orthogonal may be used, these expressions do not indicate mathematical strictness, and include substantially acceptable errors, deviations, and the like. In addition, expressions such as simultaneous and identical also include substantially acceptable ranges.

In addition, the drawings are schematic diagrams in which emphasis, omission, or adjustment of proportions has been appropriately made in order to explain the present disclosure, and differ from the actual shapes, positional relationships, and proportions. In addition, the X-axis, Y-axis, and Z-axis that may be illustrated in the drawings indicate orthogonal coordinates that have been arbitrarily set for the purpose of explaining the drawings. That is, the Z-axis is not necessarily an axis along the vertical direction, and the X-axis and Y-axis do not necessarily lie in a horizontal plane.

In addition, a plurality of inventions may be collectively described below as one embodiment. In addition, some of the contents described below are described as optional components related to the present disclosure.

[Embodiment 1]

FIG. 1 is a diagram illustrating the device configuration and functional configuration of sound signal reproduction device 100 according to Embodiment 1. Sound signal reproduction device 100 is a device that obtains a sound signal from terminal device 300 that is an external device of sound signal reproduction device 100, and reproduces the sound signal by vibrating an attaching member that is one of the attaching members based on the obtained sound signal.

In the present embodiment, sound signal reproduction device 100 includes first vibration generator 111 and second vibration generator 112 which are vibration generators, first vibration sensor 121 and second vibration sensor 122 which are vibration sensors, drive device 130, communication interface 140, processor 150, and storage device 160. Drive device 130, communication interface 140, processor 150, and storage device 160 are realized on one chip by the so-called system on a chip (SoC) technology, and constitute control device 101. It should be noted that in the present embodiment, control device 101 realized on one chip will be described as an example, but the present disclosure is not limited thereto.

The vibration generator is an actuator that vibrates the attaching member that is attached to the vibration generator, and generates sound from the attaching member. In the present embodiment, sound signal reproduction device 100 includes first vibration generator 111 and second vibration generator 112 that are driven independently as vibration generators to support stereo reproduction. The type of vibration generator is not particularly limited, and one that drives a voice coil to generate vibrations corresponding to a sound signal, one that drives a piezoelectric element to generate vibrations corresponding to sound, and the like can be exemplified. The vibration generator may be called an audio exciter, audio actuator, vibration speaker, and the like.

The attaching member to which the vibration generator is attached is not particularly limited, but a relatively hard plate-like member is suitable. Specifically, furniture, building materials, members for vehicles, and the like can be exemplified. In the case of the present embodiment, with respect to the attaching members, among the three mirrors arranged side by side in the left-right direction on the washbasin, the mirror arranged at one end functions as first attaching member 211, and the mirror arranged at the other end functions as second attaching member 212. First vibration generator 111 is attached to the back side of first attaching member 211 and generates sound through first attaching member 211. Second vibration generator 112 is attached to the back side of second attaching member 212 and generates sound through second attaching member 212. First attaching member 211 and second attaching member 212 are each attached to the washbasin body (not shown) via a hinge (not shown). The vibration of first attaching member 211 generated by first vibration generator 111 hardly reaches second attaching member 212, and the vibration of second attaching member 212 generated by second vibration generator 112 hardly reaches first attaching member 211.

The vibration sensor is a sensor that detects vibrations of the attaching member that is attached to the vibration sensor. In the present embodiment, sound signal reproduction device 100 includes omnidirectional first vibration sensor 121 and omnidirectional second vibration sensor 122 that detect vibrations independently in order to detect the approximate position where the user knocks on the attaching member to which the vibration sensor is attached. A specific detection method will be described later. The type of vibration sensor is not particularly limited, and an acceleration sensor using a strain gauge, and the like can be exemplified. It should be noted that in the present embodiment, processor 150 generates position information based on the difference in arrival time of vibrations generated by the user's operation, but it is preferable that the length of the signal line from first vibration sensor 121 to processor 150 and the length of the signal line from second vibration sensor 122 to processor 150 are substantially the same length. This makes it possible to generate position information with high accuracy.

The attaching member to which the vibration sensor is attached is not particularly limited, but a relatively hard plate-like member through which vibrations can easily propagate is suitable, similar to the attaching member to which the vibration generator is attached. In the present embodiment, with respect to the attaching members, among the three mirrors arranged side by side in the left-right direction on the washbasin, the mirror arranged at the center functions as third attaching member 213. First vibration sensor 121 and second vibration sensor 122 are attached to the lower side of both left-right ends of the back side of third attaching member 213, respectively, and each of them detects vibrations generated in third attaching member 213. Third attaching member 213 is attached to the washbasin body (not shown) via a hinge (not shown). Almost no vibrations generated by first vibration generator 111 and second vibration generator 112 reach third attaching member 213.

Drive device 130 drives the vibration generator and outputs a sound signal that vibrates the attaching member to generate sound. In the case of the present embodiment, drive device 130 amplifies and outputs the two-channel sound signal decoded by processor 150 so as to correspond to first vibration generator 111 and second vibration generator 112, respectively.

Communication interface 140 transmits and receives signals to and from terminal device 300 by at least one of wireless communication and wired communication. In the case of the present embodiment, communication interface 140 conforms to the Bluetooth (registered trademark) communication standard and can perform peer to peer (P2P) communication with terminal device 300 with which it has been paired in advance. Communication interface 140 receives, for example, a sound signal from terminal device 300 and transmits control information to terminal device 300.

Processor 150 is a processing device that performs data calculations and conversions, executes programs, controls other devices, and the like. In the case of the present embodiment, processor 150 executes programs stored in storage device 160, and performs the processing described below.

First vibration sensor 121 and second vibration sensor 122 detect vibrations generated when the user performs operations such as knocking, tapping, and hitting on third attaching member 213, and output signals. Based on these signals, processor 150 generates position information indicating the position at which the user performed an operation on third attaching member 213. Specifically, processor 150 generates the position information based on at least one of the difference in amplitude information, the difference in time information, or the difference in transient information, which is obtained from first vibration sensor 121 and second vibration sensor 122. At this stage, processor 150 functions as position information generator 151 by executing a program.

FIG. 2 is a diagram illustrating Example 1 of a user's operation on third attaching member 213. FIG. 3 is a diagram illustrating the detection results of vibrations generated by the user's operation. FIG. 4 is a diagram illustrating Example 2 of a user's operation on third attaching member 213. FIG. 5 is a diagram illustrating Example 3 of a user's operation on third attaching member 213.

For example, processor 150 receives a sound signal from terminal device 300 via communication interface 140, and drive device 130 drives first vibration generator 111 and second vibration generator 112 based on the received sound signal to make a state in which sound is being reproduced from first attaching member 211 and second attaching member 212. In this state, when the user knocks (hits or taps) the surface of third attaching member 213 once as shown in FIG. 2, first vibration sensor 121 detects the signal shown in the upper part of FIG. 3, and second vibration sensor 122 detects the signal shown in the lower part of FIG. 3. Processor 150 obtains the respective signals detected by first vibration sensor 121 and second vibration sensor 122. In the case of the present embodiment, processor 150 generates position information using the difference in time information among the difference in amplitude information, the difference in time information, and the difference in transient information obtained from first vibration sensor 121 and second vibration sensor 122. Specifically, processor 150 calculates the following equation (1) to derive difference T between time t1 when a signal is obtained from first vibration sensor 121 and time t2 when a signal is obtained from second vibration sensor 122 as time information.

$$T = t1 - t2 \hspace{4cm} (1)$$

As shown in FIG. 2, when a user knocks in Region 2, processor 150 cannot obtain time t0 of the knock, but can obtain time t1 when first vibration sensor 121 detects the vibration, and time t2 when second vibration sensor 122 detects the vibration. For example, when a user knocks at the midpoint between first vibration sensor 121 and second vibration sensor 122, t1 and t2 will be the same time. Therefore, according to Equation (1), T will be zero. When a user knocks on the left side of the midpoint in Region 2, time t2 will be greater than time t1, and according to Equation (1), T will be negative. However, this will be greater than or equal to the first time threshold (negative value) that is determined in advance to distinguish between Region 1 and Region 2. When a user knocks on the right side of the midpoint in Region 2, time t2 will be smaller than time t1, and according to Equation (1), T will be positive. However, this will be less than the second time threshold (positive value) that is determined in advance to distinguish between Region 2 and Region 3. It should be noted that the first time threshold and the second time threshold are stored in storage device 160 and are called by processor 150 when position information is generated.

As shown in FIG. 4, when a knock occurs within Region 1, time t2 will be greater than time t1, and according to Equation (1), T will be a negative value less than the first time threshold. On the other hand, as shown in FIG. 5, when a knock occurs within Region 3, time t2 will be less than time t1, and according to Equation (1), T will be a positive value greater than or equal to the second time threshold.

Processor 150 generates position information in such a way that when T is less than the first time threshold, the knocked position is in Region 1 (see FIG. 2), when T is greater than or equal to the first time threshold and less than the second time threshold, the knocked position is in Region 2, and when T is greater than or equal to the second time threshold, the knocked position is in Region 3. It should be noted that the first time threshold < 0 < the second time threshold.

FIG. 6 is a diagram illustrating Example 1 of relationship information. Next, processor 150 transmits control information to terminal device 300 via communication interface 140 based on the generated position information. In the case of the present embodiment, storage device 160 stores relationship information, which is a table showing the relationship between position information and control information, as shown in FIG. 6. The position information is information generated in advance, and the control information is information to be transmitted to terminal device 300. For example, when the user knocks on the midpoint between first vibration sensor 121 and second vibration sensor 122, causing processor 150 to generate position information indicating the second region, processor 150 transmits PLAY/-PAUSE as control information to terminal device 300 via communication interface 140 based on the relationship information. At this stage, processor 150 functions as control information transmitter 152.

Terminal device 300 that has obtained the control information executes an operation corresponding to the control information. For example, assume that sound signal reproduction device 100 outputs PLAY/PAUSE as control information. When terminal device 300 that has obtained the control information is not reproducing music content (is paused), it starts reproducing the music content, and when the music content is being reproduced, it pauses the reproduction of the music content.

According to sound signal reproduction device 100 according to Embodiment 1 described above, a sound signal is reproduced for the user by a vibration generator attached to the back side of the mirror included in the washbasin. In addition, two vibration sensors attached to the back of the centrally arranged mirror allow the user to change the position where the user knocks on the central mirror to perform different control on terminal device 300 that is outputting the sound signal. As described above, processor 150 transmits control information to terminal device 300, which is an external device; processor 150, which has received the sound signal generated based on the control information received by terminal device 300, controls the drive device to drive first vibration generator 111 and second vibration generator 112 to generate sound; and it becomes possible for sound signal reproduction device 100 to reproduce sound and accept control of the terminal device without compromising the design of the washbasin.

[Embodiment 2]

Next, an embodiment of a sound signal reproduction device, a method for controlling a sound signal reproduction device, and a program for controlling a sound signal reproduction device will be described. It should be noted that parts having the same actions and functions, and the same shapes, mechanisms, and structures as those of Embodiment 1 will be given the same reference numerals and descriptions thereof may be omitted. In addition, the following description will focus on the points that are different from Embodiment 1, and descriptions of the same contents may be omitted.

FIG. 7 is a diagram illustrating the device configuration and functional configuration of sound signal reproduction device 100 according to Embodiment 2. In the case of the present embodiment, first vibration generator 111, second vibration generator 112, first vibration sensor 121, and second vibration sensor 122 are attached to one attaching member 210. The type of attaching member 210 is not particularly limited. For example, a large mirror attached onto the wall surface of a washroom, the wall of a bath (such as a modular bath), the ceiling of a bath, the door of a bath, a table, a desk, and the like can be exemplified.

In the case of the present embodiment, before generating position information, processor 150 reduces the components of the sound signal from the signal obtained from the vibration sensor. That is, processor 150 functions as sound signal reducer 153 by executing a program. This is because, since the vibration generators and the vibration sensors are attached to one attaching member 210, the vibration sensor detects the vibration of attaching member 210 caused by the vibration generator, and there is a possibility that the vibration when the user knocks on attaching member 210 will be buried in the vibration based on the sound signal.

FIG. 8 is a diagram illustrating the flow of the process of reducing the sound signal. In the case of the present embodiment, specifically, processor 150 obtains the sound signals that drive device 130 drives first vibration generator 111 and second vibration generator 112, respectively, and generates an inverse sound signal of the opposite phase almost in real time. In addition, processor 150 adjusts the amplitude of the generated inverse sound signal so that it matches the amplitude of the vibration based on the sound signal detected by first vibration sensor 121 and second vibration sensor 122. Processor 150 applies the inverse sound signal to the inverse sound signal after the amplitude adjustment and the detection signals detected by first vibration sensor 121 and second vibration sensor 122, respectively, to reduce the components of the sound signal from the detection signals. In this way, it is possible to extract the vibration caused by the user knocking on attaching member 210. It should be noted that the sound signal that is the basis for generating the inverse sound signal may not only be obtained from the output of drive device 130, but may also be a decoded sound signal input to drive device 130, a signal obtained by decoding the sound signal obtained from terminal device 300, or the like.

FIG. 9 is a diagram illustrating the detection result of vibration generated by a user's operation. In the case of the present embodiment, processor 150 generates position information based on amplitude information indicating the intensity of the vibration. For example, assume that sound is being reproduced from attaching member 210. In this state, when the user knocks (hits, taps) the surface of third attaching member 213 once as shown in FIG. 2, processor 150 obtains the signals detected by first vibration sensor 121 and second vibration sensor 122, respectively, and performs a reduction process on the sound signal to obtain the two signals shown in FIG. 9. Specifically, processor 150 calculates the following equation (2) to derive difference W between maximum amplitude w1 of the signal based on first vibration sensor 121 and maximum amplitude w2 of the signal based on second vibration sensor 122 as the amplitude information.

$$W = w2 - w1 \qquad\qquad (2)$$

For example, when the user knocks on the midpoint between first vibration sensor 121 and second vibration sensor 122, w1 and w2 will be the same maximum amplitude. Therefore, W will be zero according to Equation (2). When the user knocks on the left side of the midpoint in Region 2, the distance from the knock position to second vibration sensor 122 is greater than the distance from the knock position to first vibration sensor 121, and the amplitude of the vibration attenuates the further away from the knock position, so that maximum amplitude w2 will be smaller than maximum amplitude w1, and W will be negative according to Equation (2). However, it will be greater than or equal to the first amplitude threshold (negative value) that is determined in advance to distinguish between Region 1 and Region 2. When the user knocks on the right side of the midpoint in Region 2, maximum amplitude w2 will be greater than maximum amplitude w1, and W will be positive according to Equation (2). However, it will be less than the second amplitude threshold (positive value) that is determined in advance to distinguish between Region 2 and Region 3. It should be noted that the first amplitude threshold and the second amplitude threshold are stored in storage device 160, and are called by processor 150 when position information is generated.

As shown in FIG. 4, when a knock occurs within Region 1, maximum amplitude w2 is smaller than maximum amplitude w1, and according to Equation (2), W will be a negative value less than or equal to the first amplitude threshold. On the other hand, as shown in FIG. 5, when a knock occurs within Region 3, maximum amplitude w2 is larger than maximum amplitude w1, and according to Equation (2), W will be a positive value greater than or equal to the second amplitude threshold.

Processor 150 generates position information in such a way that when W is less than the first amplitude threshold, the knocked position is in Region 1 (see FIG. 2), when W is greater than or equal to the first amplitude threshold and less than the second amplitude threshold, the knocked position is in Region 2, and when W is greater than or equal to the second amplitude threshold, the knocked position is in Region 3. It should be noted that the first amplitude threshold < 0 < the second amplitude threshold.

The next transmission of control information by processor 150 is the same as in Embodiment 1.

Sound signal reproduction device 100 according to Embodiment 2 described above can achieve the same effects as sound signal reproduction device 100 according to Embodiment 1. In addition, even when the vibration generator and the vibration sensor are attached to the same attaching member 210 and the vibration sensor detects vibrations based on a sound signal, it becomes possible to correctly extract vibrations caused by the user's knock and correctly generate position information.

[Embodiment 3]

Next, embodiments of a sound signal reproduction device, a method for controlling a sound signal reproduction device, and a program for controlling a sound signal reproduction device will be described. It should be noted that parts having the same actions and functions, and the same shapes, mechanisms, and structures as those in Embodiments 1 and 2 will be given the same reference numerals and descriptions thereof may be omitted. In addition, the following description will focus on the differences from Embodiment 1 and Embodiment 2, and descriptions of the same contents may be omitted.

FIG. 10 is a diagram illustrating the device configuration and functional configuration of sound signal reproduction device 100 according to Embodiment 3. In the case of the present embodiment, one vibration sensor 120 is attached to third attaching member 213. Vibration sensor 120 includes a plurality of directivities (three directions, D1, D2, and D3, in the present embodiment) that strongly detect signals arriving from the directions shown by the arrows in FIG. 10. Here, vibration sensor 120 with directivity is vibration sensor 120 that includes the characteristic of having a high detection sensitivity for vibrations arriving from a specific direction and a decrease in detection sensitivity when the direction deviates from the specific direction.

In the case of the present embodiment, processor 150 generates position information based on amplitude information indicating the intensity of vibration obtained from vibration sensor 120 with three-way directivity.

FIG. 11 is a diagram illustrating Example 4 of a user's operation on third attaching member 213. FIG. 12 is a diagram illustrating Example 5 of a user's operation on third attaching member 213. FIG. 13 is a diagram illustrating Example 6 of a user's operation on third attaching member 213. The method by which processor 150 generates position information based on the signal obtained from vibration sensor 120 is not particularly limited. In the case of the present embodiment, when a user knocks within Region 1, processor 150 obtains a signal from direction D1, a signal from direction D2, and a signal from direction D3, as shown in the graph of FIG. 11. Processor 150 derives maximum amplitudes wd1, wd2, and wd3 of the three obtained signals. If one (wd1) of maximum amplitudes wd1, wd2, and wd3 is greater than or equal to first directivity threshold value Th1 that is determined in advance, processor 150 generates position information indicating that Region 1 has been knocked. This determination by processor 150 is the same when Region 3 shown in FIG. 13 is knocked and when Region 5 is knocked (not shown).

When the user knocks within Region 2, processor 150 obtains a signal from direction D1, a signal from direction D2, and a signal from direction D3, as shown in the graph of FIG. 12. Processor 150 derives maximum amplitudes wd1, wd2, and wd3 of the three obtained signals. If none of maximum amplitudes wd1, wd2, and wd3 are greater than or equal to first directivity threshold Th1 that is determined in advance, and there are two (wd1, wd2) that are greater than or equal to second directivity threshold th2, processor 150 generates position information indicating that Region 2 has been knocked. This determination by processor 150 is the same when Region 4 is knocked (not shown).

FIG. 14 is a diagram illustrating Example 2 of relationship information. Processor 150 transmits control information to terminal device 300 via communication interface 140 based on the generated position information. In the case of the present embodiment, storage device 160 stores relationship information, which is a table showing the relationship between position information and control information, as shown in FIG. 14. For example, when a user knocks diagonally above and to the left of vibration sensor 120 (Region 2), causing processor 150 to generate position information indicating the second region, processor 150 transmits volume DOWN as control information to drive device 130 based on the relationship information without going through communication interface 140.

Drive device 130, which obtained the volume DOWN signal, reduces the amplification rate of the sound signal from its current level.

Sound signal reproduction device 100 according to Embodiment 3 described above can achieve the same effects as sound signal reproduction device 100 according to Embodiment 1. In addition, by using a directional vibration sensor, it becomes possible to output many different items of control information even with a single vibration sensor.

[Embodiment 4]

Next, embodiments of a sound signal reproduction device, a method for controlling a sound signal reproduction device, and a program for controlling a sound signal reproduction device will be described. It should be noted that parts having the same actions and functions, and the same shapes, mechanisms, and structures as those in Embodiments 1, 2 and 3 will be given the same reference numerals and descriptions thereof may be omitted. In addition, the following description will focus on the differences from Embodiments 1, 2 and 3, and descriptions of the same contents may be omitted.

FIG. 15 is a diagram illustrating the device configuration and functional configuration of sound signal reproduction device 100 according to Embodiment 4. In the case of the present embodiment, first vibration generator 111 is attached to first attaching member 211, second vibration generator 112 is attached to second attaching member 212, and first vibration sensor 121 and second vibration sensor 122 are attached to third attaching member 213. In addition, motion detection sensor 123 that detects the motion of third attaching member 213 is attached to third attaching member 213 to which first vibration sensor 121 and second vibration sensor 122 are attached.

Motion detection sensor 123 detects the motion of the attaching member to which the vibration sensor is attached. The type of motion detection sensor 123 is not particularly limited. For example, when the attaching member is a mirror attached to the washbasin via a hinge, motion detection sensor 123 may be a sensor that detects whether the mirror is open or closed. Specifically, for example, a microswitch that detects the closed position of the mirror, an illuminance sensor that detects the difference in brightness on the back side of the mirror due to the mirror being opened or closed, a magnetic sensor that detects whether the mirror is close to a magnet attached to the washbasin in order to keep the mirror closed, and the like can be exemplified as motion detection sensor 123. It should be noted that a vibration sensor for motion detection may be included in addition to the vibration sensor for detecting the user's knock in order to detect the motion of the attaching member in detail. In addition, at least one of the vibration sensors for knock detection may function as motion detection sensor 123.

In the case of the present embodiment, before position information is generated, processor 150 processes the signal from the vibration sensor when the attaching member moves based on the signal obtained from motion detection sensor 123. Specifically, while processor 150 detects that third attaching member 213 is in the open state, processor 150 performs processing not to accept signals from first vibration sensor 121 and second vibration sensor 122. Therefore, processor 150 does not generate position information, nor does it transmit control information.

Sound signal reproduction device 100 according to Embodiment 4 described above can achieve the same effects as sound signal reproduction device 100 according to Embodiment 1. In addition, when third attaching member 213 is not closed and in an unstable state, motion detection sensor 123 does not accept a signal from the vibration sensor even if an event similar to a user's knock occurs, thereby making it possible to prevent malfunction.

It should be noted that the present disclosure is not limited to the embodiments described above. For example, the present disclosure may include other embodiments realized by any combination of the components or by excluding some of the components described in this specification. In addition, the present disclosure also includes variations obtained by applying various modifications that a person skilled in the art can conceive to the embodiments described above in the scope without departing from the spirit of the present disclosure, that is, the meaning of the words set forth in the claims.

For example, in each of the embodiments described above, such a case that terminal device 300, drive device 130, and the like are controlled based on the generated position information is described, but processor 150 may control communication interface 140 based on the position information to switch terminal device 300 that communicates wirelessly. Specifically, as in Example 3 of the relationship information illustrated in FIG. 16, paired terminal device A and terminal device B are associated with predetermined position information as control information. Communication interface 140 is in a state where it can be connected to terminal device A. In this state, when the user knocks on Region 4 of the attaching member to which the vibration sensor is attached, processor 150 may generate position information for the fourth region and change the settings of communication interface 140 so that it can be connected to terminal device B that corresponds to the fourth region.

In addition, storage device 160 may include a plurality of different types of relationship information, and processor 150 may change the relationship information based on the generated position information. For example, as shown in FIG. 17, storage device 160 stores relationship information A and relationship information B. Processor 150 transmits control information based on relationship information A. Here, when the user knocks on the fourth region, processor 150 reads out relationship information B from storage device 160 and changes relationship information A into relationship information B. This makes it possible to transmit more types of control information than can be used to identify the position of the user's knock, making it possible to perform a wide range of controls.

In addition, although the above describes the case where position information is generated using amplitude information indicating the intensity of vibration, and the case where position information is generated using time information indicating the timing of vibration, position information may also be generated using transient information indicating the transient characteristics of vibration detected by a vibration sensor. Transient information is, for example, information indicating a decreasing trend of amplitude. Specifically, as shown in FIG. 18, in the case where attaching member 210 is a plate-like member attached via hinge 219, processor 150 may generate position information based on the fact that the decreasing trend of amplitude when the user knocks on position A near hinge 219 is different from the decreasing trend of amplitude when the user knocks on position C farthest from the hinge, and the decreasing trend of amplitude when the user knocks on position B directly above vibration sensor 120.

In addition, although a case in which processor 150 generates position information using one of amplitude information, time information, and transient information has been described, processor 150 may generate position information by combining these items of information.

A filter circuit that filters the signal detected by the vibration sensor may be disposed between the vibration sensor and processor 150, or processor 150 may perform the filtering. A high-pass filter, a low-pass filter, a band-pass filter, and the like can be exemplified as filters. By cutting out specific frequency components as described above, it becomes easier to detect vibrations caused by user's operations such as knocking while reducing the effects of vibrations based on sound signals.

In addition, instead of providing a separate filter circuit, a filterable element, such as a digital signal processor (DSP), may be placed on the same chip as processor 150 and the like within control device 101.

In addition, the filter characteristics (setting the amount of attenuation for each frequency band) may be determined in advance, or the filter characteristics may be set by performing calibration as an initial setting after sound signal reproduction device 100 is attached to the attaching member. For the calibration, a test signal (a wide band signal such as a sweep signal) is transmitted to a vibration generator to generate vibrations in the attaching member, and the vibrations are detected by a vibration sensor. The filter characteristics may be set based on the difference between the test signal and the detected signal (test signal - detected signal). Specifically, the difference in amplitude for each frequency band between the original test signal and the detected signal is calculated, and the characteristics are set to attenuate the amplitude more for bands where the difference is small including the cases where the difference is negative (bands with a small amount of attenuation (or conversely amplified) = bands where the vibration from the actuator is easily transmitted to the sensor) compared to bands where the difference is large (bands with a large amount of attenuation = bands where the vibration from the actuator is not easily transmitted to the sensor). Calibration may be performed for each filter according to the above procedure.

In addition, processor 150 may detect the number of times the user has continuously knocked the attaching member and generate count information. Processor 150 may obtain relationship information corresponding to the count information from a plurality of types of relationship information stored in storage device 160, and output control information corresponding to the position information based on this.

In addition, sound signal reproduction device 100 may accept changes in settings, changes in the type of relationship information to be used, and the like from connected terminal device 300.

In addition, in Embodiment 1 described above, processor 150 generates the position information using the difference in time information, but in Embodiment 1, processor 150 may generate the position information using at least one of the difference in time information, the difference in amplitude information, or the difference in transient information. In Embodiment 2 described above, processor 150 generates the position information using the difference in amplitude information, but in Embodiment 2, processor 150 may generate the position information using at least one of the difference in time information, the difference in amplitude information, or the difference in transient information. In Embodiment 3 described above, processor 150 generates the position information using the difference in amplitude information, but in Embodiment 3, processor 150 may generate the position information using at least one of the difference in time information, the difference in amplitude information, or the difference in transient information. In Embodiment 4 described above, the type of information based on which processor 150 generates the position information is not specified, but in Embodiment 4, processor 150 may generate the position information using at least one of the difference in time information, the difference in amplitude information, or the difference in transient information.

In addition, in Embodiment 4 described above, while a case has been described in which motion detection sensor 123 is attached to the attaching member, and processor 150 processes signals from vibration sensors when the attaching

# EP 4 550 101 A1

member performs opening and closing operations, and the like, based on signals obtained from motion detection sensor 123, sound signal reproduction device 100 according to any one of Embodiment 1 to Embodiment 3 may include motion detection sensor 123 that is attached to the attaching member. Processor 150 included in sound signal reproduction device 100 may process signals from the vibration sensors when the attaching member moves based on signals obtained from motion detection sensor 123.

[Industrial Applicability]

The present disclosure is applicable to devices that reproduce sound signals by vibrating an attaching member.

[Reference Signs List]

| 100 | Sound signal reproduction device |
| 101 | Control device |
| 111 | First vibration generator |
| 112 | Second vibration generator |
| 120 | Vibration sensor |
| 121 | First vibration sensor |
| 122 | Second vibration sensor |
| 123 | Motion detection sensor |
| 130 | Drive device |
| 140 | Communication interface |
| 150 | Processor |
| 160 | Storage device |
| 210 | Attaching member |
| 211 | First attaching member |
| 212 | Second attaching member |
| 213 | Third attaching member |
| 219 | Hinge |
| 300 | Terminal device |

**Claims**

1. A sound signal reproduction device comprising:

   a vibration generator that is attached to one or more attaching members;
   a vibration sensor that is attached to an attaching member, the attaching member being the one or more attaching members to which the vibration generator is attached or a separate attaching member separate from the one or more attaching members;
   a drive device that drives the vibration generator based on a sound signal to generate sound through the one or more attaching members;
   a processor that executes a program; and
   a storage device that stores the program executed by the processor,
   wherein causing the processor to execute the program performs:

      generating position information indicating a position of a vibration generated by a user on the attaching member to which the vibration sensor is attached, based on a signal obtained from the vibration sensor; and
      transmitting control information based on the position information.

2. The sound signal reproduction device according to claim 1,

   wherein the storage device stores relationship information indicating a relationship between the position information and the control information to be transmitted, and
   the processor transmits control information corresponding to the position information based on the relationship information.

**3.** The sound signal reproduction device according to claim 1 or 2,
wherein the processor generates the position information based on at least one of amplitude information indicating an intensity of a vibration, time information indicating a timing of the vibration, or transient information indicating a transient characteristic of the vibration, the amplitude information, the time information, and the transient information being obtained from the vibration sensor.

**4.** The sound signal reproduction device according to any one of claims 1 to 3, comprising:

a plurality of vibration sensors, each of the plurality of vibration sensors being the vibration sensor,
wherein the processor generates position information based on at least one of a difference in amplitude information, a difference in time information, or a difference in transient information obtained from the plurality of vibration sensors.

**5.** The sound signal reproduction device according to any one of claims 1 to 3,

wherein the vibration sensor is directional, and
the processor generates position information based on a direction relative to an attachment position of the vibration sensor.

**6.** The sound signal reproduction device according to any one of claims 1 to 5, comprising:

a motion detection sensor that detects a motion of the attaching member,
wherein the processor processes a signal from the vibration sensor when the attaching member moves based on the signal obtained from the motion detection sensor when position information is generated.

**7.** The sound signal reproduction device according to any one of claims 1 to 6,
wherein the processor generates an inverse sound signal that is in opposite phase to the sound signal based on which the drive device drives the vibration generator, and applies the inverse sound signal to the signal detected by the vibration sensor to reduce a component of the sound signal from the signal.

**8.** The sound signal reproduction device according to any one of claims 1 to 7,
wherein the processor controls a communication interface based on the position information to identify one terminal device from among a plurality of terminal devices capable of being connected via wireless communication.

**9.** The sound signal reproduction device according to claim 2,

wherein the storage device includes a plurality of items of the relationship information, and
the processor changes the relationship information based on the position information generated.

**10.** The sound signal reproduction device according to any one of claims 1 to 9,

wherein the processor transmits the control information to an external device, and
the drive device generates sound by driving the vibration generator based on a sound signal that has been generated by the external device based on the control information.

**11.** A method for controlling a sound signal reproduction device including:

a vibration generator that is attached to one or more attaching members;
a vibration sensor that is attached to an attaching member, the attaching member being the one or more attaching members to which the vibration generator is attached or a separate attaching member separate from the one or more attaching members;
a drive device that drives the vibration generator based on a sound signal to generate sound through the one or more attaching members;
a processor that executes a program; and
a storage device that stores the program executed by the processor, the method comprising:

by causing the processor to execute the program,
generating position information indicating a position of a vibration generated by a user on the attaching member to which the vibration sensor is attached, based on a signal obtained from the vibration sensor; and transmitting control information based on the position information.

12. A program for controlling the sound signal reproduction device that realizes the method for controlling the sound signal reproduction device according to claim 11 by being executed by a processor.

# FIG. 1

111

112

121

122

211

213

212

Drive
device

130

150

Processor

Position information
generation | 151

Control information
transmission | 152

160

Storage
device

Communication
I/F | 140

Control device

101

100

Terminal
device | 300

# FIG. 2

Region 1     Region 2     Region 3

121

t0

t1

t2

122

213

FIG. 3

First vibration sensor 121

t1

t

Second vibration sensor 122

t2

t

T

# FIG. 4

## FIG. 5

Region 1

Region 2

Region 3

121

122

t0

t1

t2

213

## FIG. 6

| Control information | Position information |
|---------------------|----------------------|
| R.SKIP | First region |
| PLAY/PAUSE | Second region |
| F.SKIP | Third region |

# FIG. 7

- 111
- 112
- 121
- 122
- 210
- Drive device
- 130
- Processor 150
- Sound signal reduction 153
- Position information generation 151
- Control information transmission 152
- Storage device 160
- Communication I/F 140
- Control device
- 101
- 100
- Terminal device 300

# FIG. 8

Sound signal

Opposite phase
amplitude adjustment

Detected signal of vibration sensor

After sound signal
reduction processing

## FIG. 9

First vibration sensor 121

Second vibration sensor 122

# FIG. 10

111

112

D2
↓
120
D1 → ○ ← D3

211

213

212

Drive
device

130

150

Processor

Position information
generation — 151

Control information
transmission — 152

160

Storage
device

Communication
I/F — 140

Control device

101

100

Terminal
device — 300

## FIG. 11

## FIG. 12

# FIG. 13

FIG. 14

| Control information | Position information |
|---|---|
| R.SKIP | First region |
| Volume DOWN | Second region |
| PLAY/PAUSE | Third region |
| Volume UP | Fourth region |
| F.SKIP | Fifth region |

# FIG. 15

Drive device
130

Processor
150

Signal processing 154

Position information generation 151

Control information transmission 152

Storage device
160

Communication I/F 140

Control device
101

100

Terminal device 300

# FIG. 16

| Control information | Position information |
|---|---|
| R.SKIP | First region |
| Terminal device A | Second region |
| PLAY/PAUSE | Third region |
| Terminal device B | Fourth region |
| F.SKIP | Fifth region |

# FIG. 17

| Control information | Position information |
|---|---|
| R.SKIP | First region |
| PLAY/PAUSE | Second region |
| F.SKIP | Third region |
| Relationship information change | Fourth region |

Relationship information A

| Control information | Position information |
|---|---|
| Rewind | First region |
| Frame forward | Second region |
| Fast forward | Third region |
| Relationship information change | Fourth region |

Relationship information B

# FIG. 18

## INTERNATIONAL SEARCH REPORT

| International application No. |
| --- |
| **PCT/JP2023/019163** |

| A. | CLASSIFICATION OF SUBJECT MATTER |
| --- | --- |

*G06F 3/043*(2006.01)i; *H04R 1/00*(2006.01)i; *H04R 3/00*(2006.01)i
FI:    G06F3/043; H04R1/00 310F; H04R3/00 310

According to International Patent Classification (IPC) or to both national classification and IPC

| B. | FIELDS SEARCHED |
| --- | --- |

Minimum documentation searched (classification system followed by classification symbols)

G06F3/043; H04R1/00; H04R3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2003-519422 A (NEW TRANSDUCERS LTD.) 17 June 2003 (2003-06-17) paragraphs [0003], [0009]-[0011], [0020], [0041], [0050], [0052], [0054]-[0056], [0059], fig. 6-9 | 1-4, 11-12 |
| Y | | 5, 7-10 |
| A | | 6 |
| Y | JP 2020-521236 A (SINTEF TTO AS) 16 July 2020 (2020-07-16) paragraphs [0005], [0006] | 5, 7-10 |
| Y | JP 2013-517548 A (ELO TOUCH SOLUTIONS, INC.) 16 May 2013 (2013-05-16) paragraphs [0001], [0004]-[0007], [0042], [0054]-[0057], fig. 1a-1b, 6 | 7-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 July 2023** | **08 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/019163**

| Patent document cited in search report | | | Publication date (day/month/year) | Patent family member(s) | | | Publication date (day/month/year) |
|---|---|---|---|---|---|---|---|
| JP | 2003-519422 | A | 17 June 2003 | US | 2001/0006006 | A1 | |
| | | | | paragraphs [0004]-[0008], [0017]-[0019], [0028]-[0031], [0063], [0090]-[0097], [0102], [0104]-[0113], [0120], fig. 6-9 | | | |
| | | | | WO | 2001/048684 | A2 | |
| | | | | AR | 29424 | A1 | |
| | | | | CA | 2392431 | A1 | |
| | | | | CN | 1413335 | A | |
| | | | | CZ | 20022173 | A3 | |
| | | | | DE | 60008426 | T2 | |
| | | | | KR | 10-0729495 | B1 | |
| | | | | MX | PA02006221 | A | |
| JP | 2020-521236 | A | 16 July 2020 | US | 2021/0271338 | A1 | |
| | | | | paragraphs [0012]-[0020] | | | |
| | | | | WO | 2018/211281 | A1 | |
| | | | | CA | 3063819 | A1 | |
| | | | | CN | 111095180 | A | |
| JP | 2013-517548 | A | 16 May 2013 | US | 2013/0027359 | A1 | |
| | | | | paragraphs [0001], [0003]-[0006], [0050], [0062]-[0065], fig. 1a-1b, 6 | | | |
| | | | | WO | 2011/085985 | A1 | |
| | | | | KR | 10-2012-0115386 | A | |
| | | | | CN | 102834798 | A | |

Form PCT/ISA/210 (patent family annex) (January 2015)

**REFERENCES CITED IN THE DESCRIPTION**

**Patent documents cited in the description**

- JP 2004222205 A